# EUROPÄISCHE PATENTSCHRIFT

(11) **EP 3 914 507 B1**
(45) Veröffentlichungstag und Bekanntmachung des Hinweises auf die Patenterteilung: **27.09.2023**
(21) Anmeldenummer: 19820675.7
(22) Anmeldetag: 02.12.2019
(51) Int. Cl.: B62K 21/04, B62K 21/08, B62K 21/18, B62K 21/20

(54) **KIPPENTKOPPELTE LENKVORRICHTUNG EINES MOTORRADES**
TILT-DECOUPLED STEERING DEVICE OF A MOTORBIKE
DISPOSITIF DE DIRECTION DE MOTOCYCLETTE, À COMPENSATION DE BASCULEMENT

(30) Priorität: 23.01.2019 DE 102019101612
(43) Veröffentlichungstag der Anmeldung: 01.12.2021
(73) Patentinhaber: Bayerische Motoren Werke Aktiengesellschaft, 80809 München (DE)
(72) Erfinder: FISCHER, Dirk, 85748 Garching (DE); FORSTER, Gerhard, 93059 Regensburg (DE)
(86) Internationale Anmeldenummer: PCT/EP2019/083223
(87) Internationale Veröffentlichungsnummer: WO 2020/151859

(56) Entgegenhaltungen:
- EP-A1- 0 507 088
- WO-A1-97/26178
- FR-A1- 2 744 980

## Beschreibung

Die Erfindung betrifft eine kippentkoppelte Lenkvorrichtung eines Motorrades sowie ein Motorrad mit einer solchen kippentkoppelten Lenkvorrichtung.

Im Stand der Technik sind bereits eine Vielzahl von Vorderradaufhängungen bei Motorrädern bzw. einspurigen Kraftfahrzeugen bekannt. Beispielsweise kann den Schriften WO 97/26178 A1, FR 2 744 980 A1 und EP 0 507 088 A1 jeweils eine solche Vorderradaufhängung entnommen werden. Dokument WO 97/26178 A1 zeigt die technischen Merkmale der Präambel des Anspruchs 1.

Zu der bekannten Vorderradaufhängungen gehört auch die derzeit unter der Bezeichnung Telelever bekannte Vorderradaufhängung. Diese besteht im Wesentlich aus einer angepassten Teleskopgabel, einem Längslenker und einem Federbein. Durch die Teleskopgabel, welche zwei Gabelbeine und zwei die Gabelbeine miteinander verbindende Gabelbrücken umfasst, wird das Vorderrad des Motorrads geführt und eine Lenkbewegung auf das Vorderrad übertragen. Die Teleskopgabel bzw. die Gabelbeine übernehmen hierbei im Regelfall keine Federung und Dämpfung des Vorderrades. Eine erste Gabelbrücke verbindet die Gabelbeine an einem oberen Ende nahe dem Motorradlenker und ist im Stand der Technik drehbar mit einem Lenkkopf des Motorrads bzw. mit einem Rahmen des Motorrads verbunden. Eine zweite Gabelbrücke verbindet die Gabelbeine nahe dem Vorderrad. Der Längslenker ist drehbar mit der zweiten Gabelbrücke und dem Motorradrahmen verbunden und somit wie eine Schwinge drehbar gelagert. Zwischen dem Längslenker und dem Motorradrahmen bzw. dem Lenkkopf des Motorrads ist das Federbein angeordnet, welches diese gegeneinander abstützt. Bei einer Auf- oder Abbewegung des Vorderrades wird diese über die untere Gabelbrücke und den Längslenker von dem Federbein gefedert bzw. gedämpft. Dabei kommt es durch die Kinematik der Vorderradaufhängung nicht lediglich zu einer Aus- oder Einfederbewegung entlang der Gabelbeine oder entlang des Federbeines, sondern auch zu einer Drehung bzw. zu einer Kippbewegung der gesamten Teleskopgabel um eine zu der Lenkachse orthogonalen Kippachse am Lenkkopf, so dass sich der Winkel zwischen der Teleskopgabel und der Motorradrahmen verändert. Diese Kippbewegung wird bei den im Stand der Technik bekannten Systemen meist unmittelbar auf den Motorradlenker und über diesen auf den Fahrer des Motorrads übertragen. Solche Kippbewegungen können den Fahrer verunsichern und dadurch beispielsweise zu Fahrfehlern führen.

Der Erfindung liegt deshalb die Aufgabe zugrunde die vorgenannten Nachteile zu überwinden und eine Lenkvorrichtung bereitzustellen, durch welche der Motorradlenker von einer Kippbewegung der Gabelbeine um eine orthogonal zu der Lenkachse verlaufende Kippachse entkoppelt wird.

Diese Aufgabe wird durch die Merkmalskombination gemäß Patentanspruch 1 gelöst.

Erfindungsgemäß wird eine kippentkoppelte Lenkvorrichtung eines Motorrades vorgeschlagen. Diese umfasst eine Lenkerbrücke zur Aufnahme eines Motorradlenkers, eine Gabelbrücke zur Aufnahme eines Gabelbeins und ein die Lenkerbrücke mit der Gabelbrücke verbindendes Entkopplungselement. Die Lenkerbrücke ist um eine Lenkachse des Motorrades drehbar gelagert und um eine zu der Lenkachse orthogonale Kippachse fixiert, wodurch die Lenkerbrücke bzw. der an ihr aufgenommene Motorradlenker nur um die Lenkachse und nicht um die Kippachse drehbar ist. Die Gabelbrücke ist um die Lenkachse und um die Kippachse drehbar gelagert, so dass die Gabelbrücke mit den an ihr vorzugsweise angeordneten Gabelbeinen sowohl eine Lenkbewegung um die Lenkachse als auch eine Kippbewegung um die Kippachse ausführen kann. Darüber hinaus ist das Entkopplungselement elastisch ausgebildet. Ferner ist das Entkopplungselement ausgebildet, eine Lenkbewegung in eine Lenkrichtung um die Lenkachse von der Lenkerbrücke auf die Gabelbrücke zu übertragen und eine Kippbewegung in eine Kipprichtung um die Kippachse der Gabelbrücke gegenüber der Lenkerbrücke durch elastische Verformung auszugleichen.

Da sowohl die Lenkerbrücke als auch die Gabelbrücke um die Lenkachse drehbar sind, kann eine Lenkbewegung bzw. eine Lenkkraft von dem Entkopplungselement übertragen werden. Bei einer Kippbewegung kann bzw. soll die Lenkerbrücke jedoch nicht der Kippbewegung folgen, da diese nicht um die Kippachse kippbar ist. Bei einer Lenkbewegung werden in das Entkopplungselemente Längskräfte eingebracht, welche entlang einer Längsachse des Entkopplungselements zwischen der Lenkerbrücke und der Gabelbrücke übertragen werden. Da die Anbindung des Entkopplungselements an die Lenkerbrücke und die Kabelbrücke im Wesentlichen in einer Ebene liegen, führen die Längskräfte zu keiner wesentlichen Verformung des Entkopplungselements um die Lenkachse. Bei der Kippbewegung werden in das Entkopplungselement Querkräfte eingebracht, wobei die Einleitungs- und Ausleitungspunkte der Querkräfte entlang der Längsachse des Entkopplungselements beabstandet sind. Da die Lenkerbrücke zudem gegen eine Bewegung um die Kippachse fixiert ist, baut sich in dem Entkopplungselement durch die Querkräfte eine mechanische Spannung auf, so dass das Entkopplungselement elastisch verformt wird und die Gabelbrücke weiterhin mit der Lenkerbrücke verbunden bleibt.

Besonders vorteilhaft ist, wenn das Entkopplungselement sich bei einer Lenkbewegung bzw. um die Lenkachse starr verhält, so dass die Lenkbewegung direkt und im Wesentlichen ohne elastische Verformung übertragen wird.

Vorteilhaft ist zudem eine Variante der Lenkvorrichtung, bei welcher diese einen an der Lenkerbrücke fixierten Lenkzapfen umfasst, der sich koaxial entlang der Lenkachse erstreckt und drehbar an einem Motorradrahmen des Motorrads lagerbar und vorzugsweise an dem Motorradrahmen bzw. einem mit dem Motorradrahmen verbundenen Lenkkopf aufnehmbar ist, so dass die Lenkerbrücke durch den Lenkzapfen um die Lenkachse drehbar und zu der Kippachse fixiert mit dem Motorradrahmen verbindbar ist.

Um eine Drehung der Gabelbrücke sowohl um die Lenkachse als auch um die Kippachse zu ermöglichen, sieht eine weitere vorteilhafte Ausgestaltung der Erfindung vor, dass die Lenkvorrichtung ferner ein Gelenklager mit einem Innenring und einem Außenring umfasst. Der Innenring des Gelenklagers ist konzentrisch zu der Lenkachse an dem Lenkzapfen oder dem Motorradrahmen angeordnet. Darüber hinaus ist der Außenring des Gelenklagers mit der Gabelbrücke verbunden, so dass die Gabelbrücke durch das Gelenklager um die Lenkachse und um die Kippachse drehbar mit dem Motorradrahmen verbindbar ist. Vorzugsweise hat der Innenring hierfür einen kugeligen, konvexen Außendurchmesser, wobei der Außenring an der Innenseite korrespondierend dazu konkav geformt ist, so dass der Außenring um den Innenring sowohl um die Drehachse als auch um die Kippachse bzw. um einem im Zentrum des Innenrings bestimmten Lagerpunkt beweglich ist.

Ist das Entkopplungselement außerhalb einer Ebene der Kippachse, um welchen die Kippbewegung stattfindet, angeordnet, muss das Entkopplungselement eine durch den Abstand zu der Ebene entstehende größere Bewegung ausgleichen, so dass das Entkopplungselement stärker verformt wird. Daher sieht eine vorteilhafte Weiterbildung vor, dass das Entkopplungselement in einer Ebene mit der Kippachse angeordnet ist. Vorzugsweise ist das Entkopplungselement symmetrisch in der Ebene angeordnet, so dass eine Längsachse des Entkopplungselements in der Ebene liegt.

Um eine Übertragung der Lenkbewegung um die Lenkachse und eine Flexibilität bzw. Elastizität um die Kippachse zu ermöglichen, sieht eine ebenfalls vorteilhafte Weiterbildung vor, dass das Entkopplungselement flach ist und sich im Wesentlichen in einer Ebene orthogonal zu der Lenkachse erstreckt. Dadurch können in das Entkopplungselement eingeleitete Längskräfte um die Lenkachse ohne eine wesentliche Verformung des Entkopplungselements in diesem weitergeleitet werden.

Ferner ist das Entkopplungselement vorzugsweise federnd und bei einer vorteilhaften Variante aus Federstahl gebildet.

Durch eine flache Ausbildung und Federstahl als Material des Entkopplungselements bildet diese im Wesentlichen eine Flachfeder oder eine Blattfeder mit nur einer Federlage, wobei das Entkopplungselement in der Ebene unterschiedlich geformt ausgebildet sein kann.

Zur Verbindung des Entkopplungselements mit der Lenkerbrücke und er Gabelbrücke sieht eine ebenfalls vorteilhafte Ausgestaltungsvariante der Lenkvorrichtung vor, dass das Entkopplungselement zumindest eine erste Verbindungsanordnung zur Fixierung des Entkopplungselements an der Lenkerbrücke und zumindest eine zweite Verbindungsanordnung zur Fixierung des Entkopplungselements an der Gabelbrücke aufweist. Die Verbindungsanordnungen liegen vorzugsweise in einer zu der Lenkachse orthogonalen Ebene und können beispielsweise jeweils aus einer Ausnehmung in dem Entkopplungselement, wie einem Loch, und einer Verschraubung des Entkopplungselements durch die Ausnehmungen an der Gabelbrücke und der Lenkerbrücke gebildet werden.

Um eine möglichst spielfreie Übertragung der Lenkbewegung von der Lenkerbrücke auf die Gabelbrücke und somit eine spielfreie Lenkung zu ermöglichen, ist ferner vorzugsweise vorgesehen, dass die erste Verbindungsanordnung ausgebildet ist, das Entkopplungselement in die Lenkrichtung um die Lenkachse spielfrei mit der Lenkerbrücke zu verbinden und die zweite Verbindungsanordnung ausgebildet ist, das Entkopplungselement in die Lenkrichtung um die Lenkachse spielfrei mit der Gabelbrücke zu verbinden. Hierzu können beispielsweise Passschrauben verwendet werden. Alternativ kann die Fixierung des Entkopplungselements an der Lenkerbrücke und der Gabelbrücke von der spielfreien Übertragung der Lenkbewegung getrennt werden, in dem die Verbindungsanordnungen beispielsweise sowohl eine Schraube zur Fixierung und einen Passstift zur spielfreien Übertragung der Lenkbewegung umfassen.

Eine weitere vorteilhafte Variante der Erfindung sieht vor, dass das Entkopplungselement ringförmig ausgebildet ist. Zwei erste Verbindungsanordnungen und zwei zweite Verbindungsanordnungen sind dann alternierend zueinander und in Umfangsrichtung gleichmäßig verteilt vorgesehen. Das Entkopplungselement ist dabei ferner sich um die Lenkachse erstreckend angeordnet, so dass die Lenkachse durch und vorzugsweise mittig durch eine von dem ringförmigen Element gebildete zentrale Ausnehmung verläuft.

Alternativ zu einer ringförmigen Variante sieht eine ebenfalls vorteilhafte Alternative vor, dass das Entkopplungselement bogenförmig ausgebildet ist. Aus der Draufsicht in Richtung der Lenkachse weist das Entkopplungselement somit eine Form ähnlich eines symmetrischen zweiarmigen Bumerangs auf. Ferner ist dabei vorgesehen, dass jeweils eine zweite Verbindungsanordnung an sich gegenüberliegenden Endabschnitten des Entkopplungselements und zumindest eine erste Verbindungsanordnung zwischen den zweiten Verbindungsanordnungen vorgesehen sind, wobei die zumindest eine erste Verbindungsanordnung vorzugsweise symmetrischen zwischen den zweiten Verbindungsanordnungen vorgesehen ist. Das Entkopplungselement ist zudem sich um die Lenkachse erstreckend angeordnet, so dass die Lenkachse vorzugsweise durch eine Symmetrielinie einer von dem bogenförmigen Element aufgespannte Fläche verläuft.

Eine vorteilhafte Weiterbildung sieht zudem vor, dass an der Lenkerbrücke oder der Gabelbrücke ein Sicherheitszapfen vorgesehen ist, der sich parallel zu der Lenkachse von der Lenkerbrücke oder der Gabelbrücke zu der jeweils anderen erstreckt und sich in eine an der jeweils anderen vorgesehenen Ausnehmung hinein erstreckt. Kommt es zu einem Bruch des Entkopplungselements oder zu einer zu starken Verformung des Entkopplungselements in Lenkrichtung um die Lenkachse, kann eine radiale Außenfläche an einer zu der Außenfläche des Sicherheitszapfens weisende Innenfläche der Ausnehmung zur Anlage kommen, so dass eine Lenkbewegung um die Lenkachse über den Sicherheitszapfen zwischen der Lenkerbrücke und er Gabelbrücke übertragbar ist.

Ein weiterer Aspekt der Erfindung betrifft zudem ein Motorrad umfassend eine erfindungsgemäße Lenkvorrichtung, wobei das Motorrad ferner eine Voderradaufhängung mit zwei Gabelbeinen, einer oberen Gabelbrücke, einer unteren Gabelbrücke, einem Längslänger und einem Federbein aufweist. Die obere und die untere Gabelbrücke verbinden die Gabelbeine miteinander.

Der Längslenker verbindet die untere Gabelbrücke beweglich mit einem Motorradrahmen des Motorrads und das Federbein stützt den Längslenker gegen den Motorradrahmen ab. Die obere Gabelbrücke ist dabei die Gabelbrücke der Lenkvorrichtung, durch welche die Vorderradaufhängung von einem Motorradlenker des Motorrads kippentkoppelt ist.

Entsprechend weist das Motorrad im Wesentlichen eine derzeit sogenannte Telelever und eine erfindungsgemäße Lenkvorrichtung auf, deren obere Gabelbrücke von der Lenkerbrücke kippentkoppelt ist, so dass eine Kippbewegung der Voderradaufhängung bzw. der Gabelbeine nicht auf den Motorradlenker übertragen wird.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine schematische kippentkoppelte Lenkvorrichtung in einer seitlichen Schnittansicht;
- Fig. 2: eine perspektivisch dargestellte Lenkvorrichtung;
- Fig. 3: eine perspektivisch dargestellte Lenkvorrichtung ohne Lenkerbrücke;
- Fig. 4: eine Lenkvorrichtung aus einer Draufsicht;
- Fig. 5: eine Lenkvorrichtung aus der Draufsicht ohne Lenkerbrücke.

Die Figuren sind beispielhaft schematisch. Gleiche Bezugszeichen in den Figuren weisen auf gleiche funktionale und/oder strukturelle Merkmale hin.

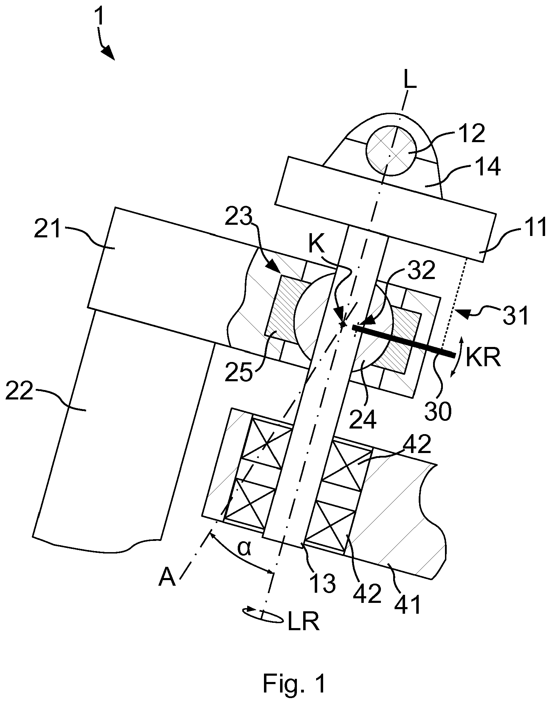

In Figur 1 ist die erfindungsgemäße Lenkvorrichtung in einer teilweise geschnitten Seitenansicht dargestellt. Die Lenkachse L liegt in der Darstellungsebene und die Kippachse K steht senkrecht zur Darstellungsebene, wobei sich die Ausrichtung der Kippachse K abhängig von einem Lenkwinkel ändern kann. Die Kippachse K verläuft jedoch immer in einer Ebene, die orthogonal zur Lenkachse L ausgerichtet ist. Bei einer Federbewegung der Vorderradaufhängung schwenkt die Gabelbrücke 21 mit den vorzugsweise zwei daran aufgenommenen Gabelbeinen 22 um die Kippachse K, so dass sich der Winkel α zwischen der Lenkachse L und einer von dem Lagerpunkt der Gabelbrücke 21 zu dem Vorderrad verlaufenden Achse A ändert. Die Gabelbrücke 21 ist über ein Gelenklager 23 an einem Lenkzapfen 13 gelagert, so dass die Gabelbrücke 21 sowohl um die Lenkachse L drehbar als auch um die Kippachse K kippbar ist. Der Lagerpunkt der Gabelbrücke 21 wird dabei vorzugsweise von dem Gelenklager 23 bestimmt und liegt auf der Lenkachse L bzw. im Schnittpunkt der Lenkachse L und der Kippachse K, so dass die Gabelbrücke 21 in alle Richtungen um ihren Lagerpunkt schwenkbar ist. Der Lenkzapfen 13 ist an einer Lenkerbrücke 11 vorzugsweise drehfest fixiert. An der Lenkerbrücke 11 ist an einer Lenkeraufnahme 14 der Lenkerbrücke 11 ein Motorradlenker 12 fixierbar. Ferner ist der Lenkzapfen 13 an einem der Lenkerbrücke 11 gegenüber liegenden Abschnitt des Lenkzapfens 13 durch Lager 42 an einem Motorradrahmen 41 oder einem mit dem Motorradrahmen 41 verbundenen Lenkkopf drehbar gelagert bzw. lagerbar, so dass die Lenkerbrücke 11 gegenüber dem Motorradrahmen 41 um die konzentrisch zu dem Lenkzapfen 13 verlaufende Lenkachse L dreh- bzw. lenkbar ist, gegenüber dem Motorradrahmen 41 jedoch nicht verkippen kann. Um eine Lenkbewegung entlang einer Lenkrichtung LR um die Lenkachse L von der Lenkerbrücke 11 auf die Gabelbrücke 21 zu übertragen, ist ein Entkopplungselement 30 vorgesehen. Das Entkopplungselement 30 ist zwischen der Lenkerbrücke 11 und der Gabelbrücke 21 angeordnet und über zumindest eine erste Verbindungsanordnung 31 an der Lenkerbrücke 11 und über zumindest eine zweite Verbindungsanordnung 32 an der Gabelbrücke 21 fixiert. Das Entkopplungselement 30 erstreckt sich im Wesentlichen in einer Ebene orthogonal zu der Lenkachse L, so dass als Längskräfte in das Entkopplungselement 30 eingebrachte Lenkkräfte um die Lenkachse L bzw. entlang der Lenkrichtung LR von der ersten Verbindungsanordnung 31 auf die zweiten Verbindungsanordnungen 32 ohne eine wesentliche Verformung des Entkopplungselements 30 übertragen werden können, wodurch eine Lenkbewegung unmittelbar von der Lenkerbrücke 11 auf die Gabelbrücke 21 übertragbar ist und sich das Entkopplungselement 30 um die Lenkachse L starr verhält. In Richtung der Kippbewegung um die Kippachse K ist die erste Verbindungsanordnung 31 von den zweiten Verbindungsanordnungen 32 beabstandet, so dass Kippkräfte um die Kippachse K bzw. entlang der Kipprichtung KR als Querkräfte in das Entkopplungselement 30 eingebracht werden, die im wesentlichen senkrecht auf der zu der Lenkachse L orthogonalen Ebene stehen zu einer elastischen Verformung des Entkopplungselements 30 führen, wobei das Entkopplungselement 30 durch elastische Verformung einen sich ändernden Abstand zwischen Lenkerbrücke 11 und Gabelbrücke 21 bei einer Änderung des Winkels α bzw. bei einer Kippbewegung in Kipprichtung KR ausgleicht.

Das Gelenklager 23 weist einen kugeligen Innenring 24 auf, der an bzw. um den Lenkzapfen 13 angeordnet und vorzugsweise drehfest an ihm fixiert ist, sowie einen Außenring 25 mit einer zu dem Innenring 24 korrespondierenden Innenfläche, so dass der Außenring 25 bzw. die mit dem Außenring 25 verbundene Gabelbrücke, von Anschlägen begrenzt, in alle Richtungen um den Innenring 24 bzw. den zentrisch in dem Innenring 24 liegenden Lagerpunkt drehbar ist.

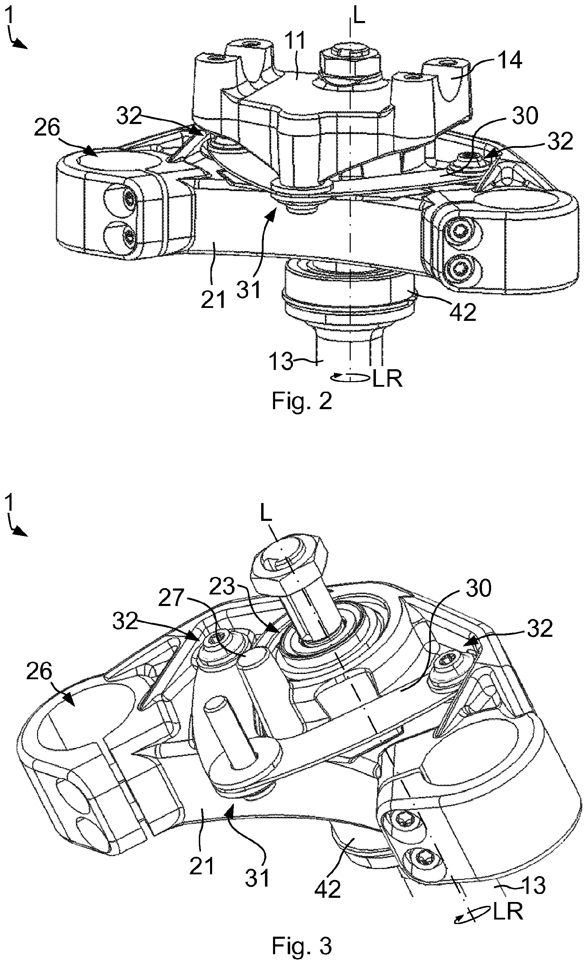

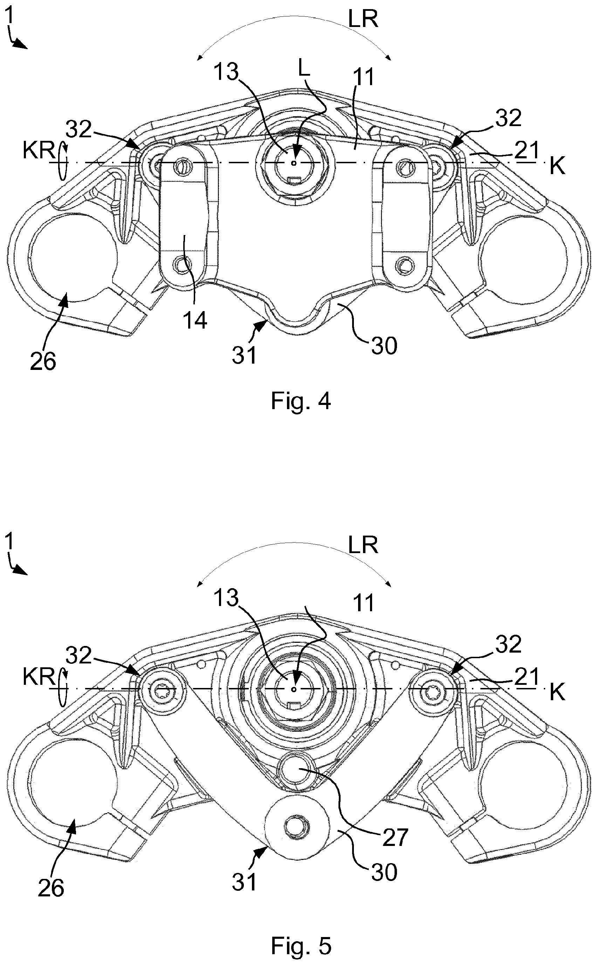

Die Figuren 2 bis 5 zeigen eine vorteilhafte Ausführungsvariante der Lenkvorrichtung 1, wobei die Lenkvorrichtung 1 in den Figuren 3 und 5 ohne die Lenkerbrücke 11 dargestellt ist.

Die dargestellte Variante der Lenkvorrichtung 1 sieht an der Gabelbrücke 21 jeweils zwei Gabelbeinaufnahmen 26 vor, so dass an der Gabelbrücke 21 zwei Gabelbeine 22 fixierbar sind. Darüber hinaus ist das Entkopplungselement 30 bogenförmig bzw. in Form eines Bumerangs ausgebildet und symmetrisch um die Lenkachse L angeordnet, wobei jeweils eine zweite Verbindungsanordnung 32 an jeweils einem endseitigen Abschnitt des Entkopplungselements 30 vorgesehen ist. Die zweiten Verbindungsanordnungen 32 sind ferner auf der Kippachse K angeordnet. Eine erste Verbindungsanordnung 31 ist symmetrisch zwischen den zweiten Verbindungsanordnungen 32 in einer Symmetrieebene durch die Lenkvorrichtung 1 vorgesehen, so dass eine Kippbewegung der Gabelbrücke 21 gegenüber der gegen die Kippbewegung fixierten Lenkerbrücke 11 von dem Entkopplungselement durch eine symmetrische Verformung ausgeglichen wird, wobei sich insbesondere jeweils die Abschnitte des Entkopplungselements 30 zwischen einer der zweiten Verbindungsanordnungen 32 und der ersten Verbindungsanordnung 31 reversibel bzw. elastisch in Kipprichtung KR verformen.

Ferner ist in den Figuren 3 und 5 ein Sicherheitszapfen 27 dargestellt, der von der Gabelbrücke 21 ausgebildet wird und sich in Richtung bzw. in eine nicht dargestellte Ausnehmung der Lenkerbrücke 11 erstreckt. Der Sicherheitszapfen 27 ist ausgebildet, eine Lenkbewegung bzw. Lenkkraft bei einer nicht zulässigen Verformung des Entkopplungselements 30 zwischen der Lenkerbrücke und der Gabelbrücke zu übertagen.

## Patentansprüche

1. Kippentkoppelte Lenkvorrichtung (1) für ein Motorrad umfassend
eine Lenkerbrücke (11) zur Aufnahme eines Motorradlenkers (12), eine Gabelbrücke (21) zur Aufnahme eines Gabelbeins (22) und ein die Lenkerbrücke (11) mit der Gabelbrücke (21) verbindendes Entkopplungselement (30), wobei
die Lenkerbrücke (11) um eine Lenkachse (L) drehbar gelagert und um eine zu der Lenkachse (L) orthogonale Kippachse (K) fixiert ist,
die Gabelbrücke (21) um die Lenkachse (L) und um die Kippachse (K) drehbar gelagert ist,
das Entkopplungselement (30) ausgebildet ist, eine Lenkbewegung in eine Lenkrichtung (LR) um die Lenkachse (L) von der Lenkerbrücke (11) auf die Gabelbrücke (21) zu übertragen,
**dadurch gekennzeichnet, dass**
das Entkopplungselement (30) elastisch ist und ausgebildet ist, eine Kippbewegung in eine Kipprichtung (KR) um die zu der Lenkachse (L) orthogonalen Kippachse (K) der Gabelbrücke (21) gegenüber der Lenkerbrücke (11) durch elastische Verformung auszugleichen.

2. Lenkvorrichtung nach dem vorhergehenden Anspruch, ferner umfassend ein an der Lenkerbrücke (11) fixierter Lenkzapfen (13), der sich koaxial entlang der Lenkachse (L) erstreckt und drehbar an einem Motorradrahmen (41) des Motorrads lagerbar ist, so dass die Lenkerbrücke (11) durch den Lenkzapfen (13) um die Lenkachse (L) drehbar und zu der Kippachse (K) fixiert mit dem Motorradrahmen (41) verbindbar ist.

3. Lenkvorrichtung nach dem vorhergehenden Anspruch, ferner umfassend ein Gelenklager (23) mit einem Innenring (24) und einem Außenring (25), wobei
der Innenring (24) des Gelenklagers (23) konzentrisch zu der Lenkachse (L) an dem Lenkzapfen (13) oder dem Motorradrahmen (41) angeordnet ist und der Außenring (25) des Gelenklagers mit der Gabelbrücke (21) verbunden ist, so dass die Gabelbrücke (21) durch das Gelenklager (23) um die Lenkachse (L) und um die Kippachse (K) drehbar mit dem Motorradrahmen (41) verbindbar ist.

4. Lenkvorrichtung nach einem der vorhergehenden Ansprüche, wobei
das Entkopplungselement (30) in einer Ebene mit der Kippachse (K) angeordnet ist.

5. Lenkvorrichtung nach einem der vorhergehenden Ansprüche, wobei
das Entkopplungselement (30) flach ist und sich im Wesentlichen in einer Ebene orthogonal zu der Lenkachse (L) erstreckt.

6. Lenkvorrichtung nach einem der vorhergehenden Ansprüche, wobei
das Entkopplungselement (30) aus Federstahl gebildet ist.

7. Lenkvorrichtung nach einem der vorhergehenden Ansprüche, wobei
das Entkopplungselement (30) zumindest eine erste Verbindungsanordnung (31) zur Fixierung des Entkopplungselements an der Lenkerbrücke (11) und zumindest eine zweite Verbindungsanordnung (32) zur Fixierung des Entkopplungselements (30) an der Gabelbrücke (21) aufweist.

8. Lenkvorrichtung nach dem vorhergehenden Anspruch, wobei
die erste Verbindungsanordnung (31) ausgebildet ist, das Entkopplungselement (30) in die Lenkrichtung (LR) um die Lenkachse (L) spielfrei mit der Lenkerbrücke (11) zu verbinden und
die zweite Verbindungsanordnung (32) ausgebildet ist, das Entkopplungselement (30) in die Lenkrichtung (LR) um die Lenkachse (L) spielfrei mit der Gabelbrücke (21) zu verbinden.

9. Lenkvorrichtung nach Anspruch 7 oder 8, wobei
das Entkopplungselement (30) ringförmig ausgebildet ist,
zwei erste Verbindungsanordnungen (31) und zwei zweite Verbindungsanordnungen (32) alternierend zueinander und in Umfangsrichtung gleichmäßig verteilt vorgesehen sind und wobei
das Entkopplungselement (30) sich um die Lenkachse (L) erstreckend angeordnet ist.

10. Lenkvorrichtung nach Anspruch 7 oder 8, wobei
das Entkopplungselement (30) bogenförmig ausgebildet ist,
jeweils eine zweite Verbindungsanordnung (32) an sich gegenüberliegenden Endabschnitten des Entkopplungselements (30) und zumindest eine erste Verbindungsanordnung (31) zwischen den zweiten Verbindungsanordnungen (32) vorgesehen sind und wobei
das Entkopplungselement (30) sich um die Lenkachse (L) erstreckend angeordnet ist.

11. Lenkvorrichtung nach dem vorhergehenden Anspruch, wobei
an der Lenkerbrücke (11) oder der Gabelbrücke (21) ein Sicherheitszapfen (27) vorgesehen ist, der sich parallel zu der Lenkachse (L) von der Lenkerbrücke (11) oder der Gabelbrücke (21) zu der jeweils anderen erstreckt und sich in eine an der jeweils anderen vorgesehenen Ausnehmung hinein erstreckt.

12. Motorrad umfassend eine Lenkvorrichtung (1) nach einem der vorhergehenden Ansprüche sowie eine Voderradaufhängung mit zwei Gabelbeinen (22), einer oberen Gabelbrücke, einer unteren Gabelbrücke, einem Längslänger und einem Federbein, wobei die obere und die untere Gabelbrücke die Gabelbeine (22) miteinander verbinden, der Längslenker die untere Gabelbrücke beweglich mit einem Motorradrahmen des Motorrads verbindet, das Federbein den Längslenker gegen den Motorradrahmen abstützt und wobei die obere Gabelbrücke die Gabelbrücke (21) der Lenkvorrichtung (1) ist, durch welche die Vorderradaufhängung von einem Motorradlenker (12) des Motorrads kippentkoppelt ist.

## Claims

1. Tilting-decoupled steering apparatus (1) for a motorcycle comprising
a handlebar bridge (11) for receiving a motorcycle handlebar (12), a fork bridge (21) for receiving a fork leg (22), and a decoupling element (30) which connects the handlebar bridge (11) to the fork bridge (21),
the handlebar bridge (11) being mounted rotatably about a steering axis (L) and being fixed about a tilting axis (K) which is orthogonal with respect to the steering axis (L),
the fork bridge (21) being mounted rotatably about the steering axis (L) and about the tilting axis (K),
the decoupling element (30) being configured to transmit a steering movement in a steering direction (LR) about the steering axis (L) from the handlebar bridge (11) to the fork bridge (21),
**characterized in that**
the decoupling element (30) is elastic and is configured to compensate by way of elastic deformation a tilting movement in a tilting direction (KR) about the tilting axis (K), orthogonal with respect to the steering axis (L), of the fork bridge (21) with respect to the handlebar bridge (11).

2. Steering apparatus according to the preceding claim, comprising, furthermore, a steering pin (13) which is fixed on the handlebar bridge (11), extends coaxially along the steering axis (L), and can be mounted rotatably on a motorcycle frame (41) of the motorcycle, with the result that the handlebar bridge (11) can be connected to the motorcycle frame (41) by way of the steering pin (13) such that it can be rotated about the steering axis (L) and is fixed with respect to the tilting axis (K).

3. Steering apparatus according to the preceding claim, comprising, furthermore, a pivot bearing (23) with an inner ring (24) and an outer ring (25),
the inner ring (24) of the pivot bearing (23) being arranged concentrically with respect to the steering axis (L) on the steering pin (13) or the motorcycle frame (41), and the outer ring (25) of the pivot bearing being connected to the fork bridge (21), with the result that the fork bridge (21) can be connected to the motorcycle frame (41) by way of the pivot bearing (23) such that they can be rotated about the steering axis (L) and about the tilting axis (K).

4. Steering apparatus according to one of the preceding claims,
the decoupling element (30) being arranged in a plane with the tilting axis (K).

5. Steering apparatus according to one of the preceding claims,
the decoupling element (30) being flat and extending substantially in a plane orthogonally with respect to the steering axis (L).

6. Steering apparatus according to one of the preceding claims,
the decoupling element (30) being formed from spring steel.

7. Steering apparatus according to one of the preceding claims,
the decoupling element (30) having at least one first connecting arrangement (31) for fixing the decoupling element on the handlebar bridge (11) and at least one second connecting arrangement (32) for fixing the decoupling element (30) on the fork bridge (21).

8. Steering apparatus according to the preceding claim,
the first connecting arrangement (31) being configured to connect the decoupling element (30) to the handlebar bridge (11) without play in the steering direction (LR) about the steering axis (L), and
the second connecting arrangement (32) being configured to connect the decoupling element (30) to the fork bridge (21) without play in the steering direction (LR) about the steering axis (L).

9. Steering apparatus according to Claim 7 or 8,
the decoupling element (30) being of annular configuration,
two first connecting arrangements (31) and two second connecting arrangements (32) being provided in a manner which alternates with respect to one another and is distributed uniformly in the circumferential direction, and
the decoupling element (30) being arranged so as to extend about the steering axis (L).

10. Steering apparatus according to Claim 7 or 8,
the decoupling element (30) being of arcuate configuration,
a second connecting arrangement (32) being provided in each case on opposite end portions of the decoupling element (30), and at least one first connecting arrangement (31) being provided between the second connecting arrangements (32), and
the decoupling element (30) being arranged so as to extend about the steering axis (L).

11. Steering apparatus according to the preceding claim,
a safety pin (27) which extends parallel to the steering axis (L) from the handlebar bridge (11) or the fork bridge (21) to the respective other one and extends into a recess provided on the respective other one being provided on the handlebar bridge (11) or the fork bridge (21) .

12. Motorcycle comprising a steering apparatus (1) according to one of the preceding claims and a front wheel suspension system with two fork legs (22), an upper fork bridge, a lower fork bridge, a trailing arm and a suspension strut, the upper and the lower fork bridge connecting the fork legs (22) to one another, the trailing arm connecting the lower fork bridge movably to a motorcycle frame of the motorcycle, the suspension strut supporting the trailing arm against the motorcycle frame, and the upper fork bridge being that fork bridge (21) of the steering apparatus (1), by way of which the front wheel suspension system is tilt-decoupled from a motorcycle handlebar (12) of the motorcycle.

## Revendications

1. Dispositif de direction (1) de motocyclette découplé en basculement, comprenant
un pont de guidon (11) destiné à recevoir un guidon de motocyclette (12), un pont de fourche (21) destiné à recevoir une jambe de fourche (22) et un élément de découplage (30) reliant le pont de guidon (11) au pont de fourche (21), dans lequel
le pont de guidon (11) est monté de manière à tourner autour d'un axe de direction (L) et est fixé autour d'un axe de basculement (K) orthogonal à l'axe de direction (L),
le pont de fourche (21) est monté de manière à pouvoir tourner autour de l'axe de direction (L) et autour de l'axe de basculement (K),
l'élément de découplage (30) est conçu de manière à transmettre un mouvement de braquage dans une direction de braquage (LR) autour de l'axe de direction (L) du pont de guidon (11), au pont de fourche (21),
**caractérisé en ce que**
l'élément de découplage (30) est élastique et est conçu pour compenser par déformation élastique un mouvement de basculement dans une direction de basculement (KR) autour de l'axe de basculement (K) du pont de fourche (21) orthogonal à l'axe de direction (L), par rapport au pont de guidon (11).

2. Dispositif de direction selon la revendication précédente, comprenant en outre un tenon de direction (13) fixé au pont de guidon (11), qui s'étend coaxialement le long de l'axe de direction (L) et qui est apte à être monté de manière rotative sur un cadre de motocyclette (41) de la motocyclette, de sorte que le pont de guidon (11) est apte à être relié au cadre de motocyclette (41) par le tenon de direction (13) de manière rotative autour de l'axe de direction (L) et de manière fixe par rapport à l'axe de basculement (K).

3. Dispositif de direction selon la revendication précédente, comprenant en outre un palier de pivotement (23) avec une bague intérieure (24) et une bague extérieure (25), dans lequel
la bague intérieure (24) du palier de pivotement (23) est agencée de manière concentrique à l'axe de direction (L) sur le tenon de direction (13) ou sur le cadre de la motocyclette (41) et la bague extérieure (25) du palier de pivotement est reliée au pont de fourche (21) de telle sorte que le pont de fourche (21) est apte à être relié au cadre de la motocyclette (41) par le palier de pivotement (23) de manière à pouvoir tourner autour de l'axe de direction (L) et autour de l'axe de basculement (K).

4. Dispositif de direction selon l'une quelconque des revendications précédentes, dans lequel
l'élément de découplage (30) est disposé dans un plan contenant l'axe de basculement (K).

5. Dispositif de direction selon l'une des revendications précédentes, dans lequel
l'élément de découplage (30) est plat et s'étend sensiblement dans un plan orthogonal à l'axe de direction (L) .

6. Dispositif de direction selon l'une quelconque des revendications précédentes, dans lequel
l'élément de découplage (30) est formé d'acier à ressort.

7. Dispositif de direction selon l'une quelconque des revendications précédentes, dans lequel
l'élément de découplage (30) comporte au moins un premier agencement de liaison (31) pour la fixation de l'élément de découplage sur le pont de guidon (11) et au moins un deuxième agencement de liaison (32) pour la fixation de l'élément de découplage (30) sur le pont de fourche (21).

8. Dispositif de direction selon la revendication précédente, dans lequel
le premier agencement de liaison (31) est conçu pour relier sans jeu l'élément de découplage (30) au pont de guidon (11) dans la direction de braquage (LR) autour de l'axe de direction (L) et
le deuxième agencement de liaison (32) est conçu pour relier sans jeu l'élément de découplage (30) au pont de fourche (21) dans la direction de braquage (LR) autour de l'axe de direction (L).

9. Dispositif de direction selon la revendication 7 ou 8, dans lequel
l'élément de découplage (30) est de forme annulaire,
deux premiers agencements de liaison (31) et deux deuxièmes agencements de liaison (32) sont prévus en alternance l'un par rapport à l'autre et répartis uniformément dans la direction périphérique, et dans lequel
l'élément de découplage (30) est disposé de manière à s'étendre autour de l'axe de direction (L).

10. Dispositif de direction selon la revendication 7 ou 8, dans lequel
l'élément de découplage (30) est réalisé selon une forme arquée,
un deuxième agencement de liaison (32) est respectivement prévu sur des sections d'extrémité opposées de l'élément de découplage (30) et au moins un premier agencement de liaison (31) est prévu entre les deuxièmes agencements de liaison (32), et dans lequel
l'élément de découplage (30) est disposé de manière à s'étendre autour de l'axe de direction (L).

11. Dispositif de direction selon la revendication précédente, dans lequel
un tenon de sécurité (27) est prévu sur le pont de guidon (11) ou sur le pont de fourche (21), lequel s'étend parallèlement à l'axe de direction (L) depuis le pont de guidon (11) ou le pont de fourche (21) vers l'autre et s'étend dans un évidement prévu sur l'autre.

12. Motocyclette comprenant un dispositif de direction (1) selon l'une des revendications précédentes, ainsi qu'une suspension avant comprenant deux jambes de fourche (22), une jambe de fourche supérieure, une jambe de fourche inférieure, un allongement longitudinal et une jambe de force, la jambe de fourche supérieure et la jambe de fourche inférieure reliant les jambe de fourche (22) entre eux, le bras longitudinal reliant de manière mobile le pont de fourche inférieur à un cadre de motocyclette de la motocyclette, la jambe de suspension soutenant le bras longitudinal contre le cadre de la motocyclette et le pont de fourche supérieur est le pont de fourche (21) du dispositif de direction (1) par lequel la suspension de roue avant est découplée en basculement d'un guidon de motocyclette (12) de la motocyclette.
